# EUROPÄISCHE PATENTSCHRIFT

(11) **EP 0 704 469 B1**
(45) Veröffentlichungstag und Bekanntmachung des Hinweises auf die Patenterteilung: **08.03.2000**
(21) Anmeldenummer: 95114706.5
(22) Anmeldetag: 19.09.1995
(51) Int. Cl.: C08G 18/67, C08G 18/08, C08G 18/42, C08G 18/66, C09D 175/16

(54) **Strahlungshärtbare wässrige Polyurethandispersionen**
Radiation-curable aqueous polyurethane dispersions
Dispersions aqueuses de polyuréthane durcissables par irradiation

(30) Priorität: 28.09.1994 DE 4434554
(43) Veröffentlichungstag der Anmeldung: 03.04.1996
(73) Patentinhaber: BASF AKTIENGESELLSCHAFT, 67056 Ludwigshafen (DE)
(72) Erfinder: Häussling, Lukas, Dr., D-67098 Bad Dürkheim (DE); Jäger, Ulrich, Dr., D-67376 Harthausen (DE); Reich, Wolfgang, Dr., D-67133 Maxdorf (DE); Beck, Erich, Dr., D-69198 Schriesheim (DE); Lebkücher, Werner, D-67159 Friedelsheim (DE); Schwalm, Reinhold, Dr., D-67157 Wachenheim (DE)

(56) Entgegenhaltungen:
- EP-A- 0 098 752
- EP-A- 0 181 486
- EP-A- 0 392 352
- US-A- 4 153 778

## Beschreibung

Die Erfindung betrifft ein wasserdispergierbares, strahlungshärtbares Polyurethan, im wesentlichen aufgebaut aus
a) organischen Polyisocyanaten,
b) Polyesterpolyolen
c) gegebenenfalls von b) verschiedenen Polyolen
d) Verbindungen mit mindestens einer gegenüber Isocyanat reaktiven Gruppe und mindestens einer Carboxylgruppe oder Carboxylatgruppe
e) Verbindungen mit mindestens einer gegenüber Isocyanat reaktiven Gruppe und mindestens einer copolymerisierbaren ungesättigten Gruppe,
f) gegebenenfalls von a) bis e) verschiedenen Verbindungen mit mindestens einer gegenüber Isocyanat reaktiven Gruppe,
wobei der k-Wert des Polyurethans (gemessen in 1 gew%-iger Lösung in Dimethylformamid) kleiner 40 ist und Aufbaukomponente e) in solchen Mengen eingesetzt wird, daß der Gehalt an copolymerisierbaren Doppelbindungen 0,15 bis 0,25 mol/100 g Polyurethan (fest) beträgt und bei der Herstellung des Polyurethan zumindest die Aufbaukomponenten a), b) und e) in einer Stufe umgesetzt werden.

Die Erfindung betrifft ebenso ein Verfahren zur Herstellung der Polyurethane sowie die Verwendung der Polyurethane als Beschichtungsmittel.

Aus der EP-A 26 313 und EP-A 554 784 sind wäßrige Polyurethandispersionen und ihre Verwendung als Beschichtungsmittel bekannt. Durch ihren Gehalt an Sulfonsäure bzw. Sulfonatgruppen haben die beschriebenen Polyurethane eine hohe Hydrophilie, was zu einer unzureichenden Naßfestigkeit von Beschichtungen führt.

Auch Polyurethane, welche Carbonsäuregruppen als dispergieraktive Komponente aufweisen, können in ihren anwendungstechnischen Eigenschaften bisher nicht befriedigen. So zeigen Polyurethandispersionen gemäß der EP-A 392 352, EP-A 181 486 und EP-A 209 684 Nachteile bezüglich der Chemikalienbeständigkeit und der mechanischen Eigenschaften, z.B. der Härte, der Elastizität und Flexibilität von Beschichtungen.

Es ist auch erwünscht, daß die Dispersionen nach Trocknen und Ablüften des Wassers einen trockenen und klebfreien Film ergeben, bevor der Film mit energiereicher Strahlung gehärtet wird. Dies ist für dünne Überzüge auf Substraten wichtig, die eine fein gezeichnete Oberfläche haben, wie z.B. Holz und Leder. Dort möchte man sehr oft eine offenporige Beschichtung erhalten, die die feine Zeichnung der Oberfläche auch nach der Beschichtung noch erkennen läßt.

Insbesondere auf Oberflächen, mit größeren Profiltiefen (Nut- und Federbretter) gibt es Bereiche, in die die energiereiche Strahlung nicht vordringen kann, so daß dort auch eine normale Trocknung einen klebfreien und trockenen Film erzeugen können soll.

Aus US 4 153 778, EP-A-98 752 und EP-A-392 352 sind strahlungshärtbare Polyurethane mit einem geringen Gehalt an Doppelbindungen bekannt.

Aufgabe der vorliegenden Erfindung waren daher Polyurethandispersionen, welche Beschichtungen mit guter Naßfestigkeit, Chemikalienbeständigkeit und guten mechanischen Eigenschaften ergeben. Des weiteren sollen bereits nach physikalischer Trocknung der aufgetragenen Polyurethandispersionen, d.h. ohne Strahlungshärtung, die Beschichtungen klebfrei und trocken sein.

Demgemäß wurden die eingangs definierten Polyurethandispersionen, ein Verfahren zu ihrer Herstellung sowie ihre Verwendung zur Herstellung von Beschichtungen gefunden.

Das Polyurethan ist im wesentlichen aus den Aufbaukomponenten a) bis f) aufgebaut.

Als Polyisocyanate a) kommen z.B. geradlinige oder verzweigte C₄-C₁₄-Alkylendiisocyanate, cycloaliphatische Diisocyanate mit insgesamt 6 bis 12 C-Atomen, aromatische Diisocyanate mit insgesamt 8 bis 14 C-Atomen, Isocyanuratgruppen aufweisende Polyisocyanate, Uretdiondiisocyanate, Biuretgruppen aufweisende Polyisocyanate, Urethan- und/oder Allophanatgruppen aufweisende Polyisocyanate, Oxadiazintriongruppen enthaltende Polyisocyanate, Uretonimin-modifizierte Polyisocyanate oder deren Gemische in Betracht.

Als Diisocyanate genannt seien z.B. Tetramethylendiisocyanat, Hexamethylendiisocyanat(1,6-Diisocyanatohexan), Octamethylendiisocyanat, Decamethylendiisocyanat, Dodecamethylendiisocyanat, Tetradecamethylendiisocyanat, Trimethylhexandiisocyanat oder Tetramethylhexandiisocyanat, cycloaliphatische Diisocyanate wie 1,4-, 1,3- oder l,2-Diisocyanatocyclohexan, 4,4'-Di(isocyanatocyclohexyl)methan, 1-Isocyanato-3,3,5-trimethyl-5-(isocyanatomethyl)cyclohexan (Isophorondiisocyanat) oder 2,4- oder 2,6-Diisocyanato-1-methylcyclohexan oder aromatische Diisocyanate wie 2,4-Diisocyanatotoluol, 2,6-Diisocyanatotoluol, Tetramethylxylylendiisocyanat, 1,4-Diisocyanatobenzol, 4,4'- und 2,4-Diisocyanatodiphenylmethan, p-Xylylendiisocyanat, sowie Isopropenyldimethyltoluylendiisocyanat.

Bei den Isocyanuratgruppen aufweisende Polyisocyanate handelt es sich insbesondere um einfache Tris-isocyanato-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 3 bis 4,5.

Bei Uretdiondiisocyanaten handelt es sich um cyclische Dimerisierungsprodukte von Diisocyanaten. Die Uretdiondiisocyanate können z.B. als alleinige Komponente oder im Gemisch mit anderen Polyisocyanaten, insbesondere den Isocyanuratgruppen enthaltenden Polyisocyanaten genannten, eingesetzt werden.

Geeignete Biuretgruppen aufweisende Polyisocyanate weisen vorzugsweise einen NCO-Gehalt von 18 bis 22 Gew.-% und eine mittlere NCO-Funktionalität von 3 bis 4,5 auf.

Urethan- und/oder Allophanatgruppen aufweisende Polyisocyanate können beispielsweise durch Umsetzung von überschüssigen Mengen an Diisocyanaten mit einfachen mehrwertigen Alkoholen wie z.B. Trimethylolpropan, Glycerin, 1,2-Dihydroxypropan oder deren Gemischen erhalten werden. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 3.

Oxadiazintriongruppen enthaltenden Polyisocyanate sind aus Diisocyanat und Kohlendioxid herstellbar.

Die genannten Polyisocyanate können vorzugsweise auch im Gemisch eingesetzt werden.

Bevorzugte Polyisocyanate sind Diisocyanate und höherfunktionelle (cyclo)aliphatische Polyisocyanate.

Besonders bevorzugt sind Isocyanurat-, Urethan- und Biuretgruppen enthaltende Polyisocyanate, z.B. Hexamethylentriisocyanurat, Biurete auf Basis von Hexamethylendiisocyanat und Urethangruppen enthaltende Polyisocyanate auf Basis von Hexamethylendiisocyanat.

Besonders bevorzugt sind auch Gemische von Diisocyanaten, z.B. Hexamethylendiisocyanat und Isophorondiisocyanat, mit höher funktionellen Polyisocyanaten im Gewichtsverhältnis 95:5 bis 5:95, insbesondere 95:50 bis 5:50.

Bei den Polyesterpolyolen b) handelt es sich insbesondere um Polyesterdiole, vorzugsweise um Umsetzungsprodukte von zweiwertigen Alkoholen mit zweiwertigen Carbonsäuren. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, aromatische oder heterocyclisch sein und gegebenenfalls, z.B. durch Halogenatome, substituiert und/oder ungesättigt sein. Als Beispiele hierfür seien genannt: Bernsteinsäure, Adipinsäure, Korksäure, Azelainsäure, Sebacinsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Als mehrwertige Alkohole kommen z.B. Ethylenglykol, Propylenglykol-(1,2) und -(1,3), Butandiol-(1,4), -(1,3), Butendiol-(1,4), Butindiol-(1,4), Pentandiol-(1,5), Hexandiol-(1,6), Octandiol-(1,8), Neopentylglykol, Cyclohexandimethanol (1,4-Bis-hydroxymethylcyclohexan), 2-Methyl-1,3-propandiol, Pentandiol-(1,5), ferner Diethylenglykol, Triethylenglykol, Tetraethylenglykol. Polyethylenglykol, Dipropylenglykol, Polypropylenglykol, Dibutylenglykol und Polybutylenglykole in Betracht.

Das zahlenmittlere Molgewicht Mₙ der Polyesterpolyole liegt vorzugsweise zwischen 500 und 5.000, besonders bevorzugt zwischen 750 und 3.000 g/mol. Die Uneinheitlichkeit M_{w}/Mₙ ist vorzugsweise größer 1 und besonders bevorzugt größer 1,5. Werte von 8 werden im allgemeinen nicht überschritten. Mₙ bzw. M_{w} werden bestimmt durch Gelpermeationschromatographie (Polystyrolstandard, Elutionsmittel, Tetrahydrofuran, UV-Detektion).

Bei den weiteren Polyolen c) handelt es sich z.B. um niedermolekulare Diole oder auch Triole insbesondere mit einem Molekulargewicht unter 500 g/mol, welche als Kettenverlängerer oder Vernetzer Verwendung finden. In Betracht kommen z.B. die oben als Aufbaukomponenten des Polyesters genannten Diole.

Als weitere Aufbaukomponente d) werden Verbindungen eingesetzt, die mindestens eine, vorzugsweise eine oder zwei gegenüber Isocyanatgruppen reaktionsfähige Gruppen, also Hydroxyl-, primäre oder sekundäre Aminogruppen, und mindestens eine, vorzugsweise eine, Carboxyl- oder Carboxylatgruppe enthalten.

Genannt seien z.B. Hydroxycarbonsäuren, z.B. Dihydroxycarbonsäuren wie Dimethylolpropionsäure oder Aminocarbonsäuren. Bevorzugt sind Aminocarbonsäuren, besonders bevorzugt Diaminocarbonsäuren. Ganz besonders bevorzugt sind Addukte von Acrylsäure an C₂-C₆-, vorzugsweise C₂-Alkylendiamine im Molverhältnis Alkylendiamin:Acrylsäure von vorzugsweise ca. 1:1 (PUD-Salz).

Durch Aufbaukomponente d) werden die Polyurethane selbst dispergierbar, d.h. beim Dispergieren in Wasser werden in diesem Fall keine Dispergierhilfsmittel wie Schutzkolloide oder Emulgatoren benötigt.

Carboxylgruppen werden vor oder bei der Dispergierung in Wasser z.B. durch anorganische und/oder organische Basen, wie Alkalihydroxyde, -carbonate-, hydrogencarbonate, Ammoniak oder primäre, sekundäre oder vorzugsweise tertiäre Amine wie Triethylamin neutralisiert.

Als Aufbaukomponente e), welche mindestens eine, vorzugsweise eine copolymerisierbare ungesättigte Gruppe und mindestens eine, vorzugsweise eine gegenüber Isocyanat reaktive Gruppe aufweisen, kommen z.B. Ester von Acryl- oder Methacrylsäure mit Polyolen, wobei mindestens eine Hydroxylgruppen unverestert bleibt, in Betracht. Besonders bevorzugt sind C₁-C₁₂-Hydroxyalkyl (meth)acrylate, wobei die Alkylketten linear oder verzweigt sein können.

Bei den gegebenenfalls einzusetzenden Aufbaukomponenten f) handelt es sich z.B. um mindestens difunktionelle Amin-Kettenverlängerer bzw. -vernetzer vorzugsweise des Molgewichtsbereiches von 32 bis 500 g/mol, welche mindestens zwei primäre, zwei sekundäre oder eine primäre und eine sekundäre Aminogruppe enthalten.

Beispiel hierfür sind Diamine, wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan.

Die Anteile der einzelnen Aufbaukomponenten können geeigneterweise in Grammäquivalent der gegenüber Isocyanat reaktiven Gruppen der Komponenten b) bis f), bezogen auf 1 Grammäquivalent Polyisocyanat a) angegeben werden und betragen:
b) vorzugsweise 0,1 bis 0,8, besonders bevorzugt 0,2 bis 0,7 Grammäquivalent der Hydroxylgruppen,
c) vorzugsweise 0 bis 0,8. besonders bevorzugt 0 bis 0,7 Grammäquivalent der Hydroxylgruppen und
f) vorzugsweise 0 bis 0,4. besonders bevorzugt 0 bis 0,2 Grammäquivalent von mit Isocyanat reaktiven Gruppen.

Aufbaukomponenten d) werden vorzugsweise in solchen Mengen eingesetzt, daß das Polyurethan einen Gehalt von 0,005 bis 0,1, besonders bevorzugt 0,01 bis 0,03 mol Carboxyl- bzw. Carboxylatgruppen pro 100 g Polyurethan aufweist.

Verbindungen e) werden in solchen Mengen eingesetzt, daß der Gehalt an Doppelbindungen im Polyurethan 0,15 bis 0,25 mol pro 100 g Polyurethan beträgt.

Das molare Verhältnis von Isocyanatgruppen zu den mit Isocyanat reaktiven Gruppen aller Aufbaukomponenten b) bis f) (im wesentlichen Hydroxylgruppen, primäre und sekundäre Aminogruppen) beträgt vorzugsweise 1:0,8 bis 1:1,2, besonders bevorzugt ca. 1:1.

Die Herstellung des erfindungsgemäßen Polyurethans erfolgt durch Umsetzung zumindest der Aufbaukomponenten a), b) und e) in einer Stufe. Es können dabei z.B. auch die Komponenten b) und e) vorgelegt werden, wobei das Polyisocyanat während der Reaktion zudosiert wird. Es ist von Bedeutung, daß bei der Reaktion Komponenten b) und e) und gegebenenfalls auch c) in Konkurrenz miteinander stehen und gleichzeitig mit dem Polyisocyanat zur Reaktion gebracht werden. Dies ist eine wichtige Bedingung, um eine breite Molekulargewichtsverteilung des Polyurethans einzustellen.

Aufbaukomponente d) wird vorzugsweise erst gegen Ende der Reaktion zugesetzt.

Der Reaktionslauf kann durch die Abnahme der funktionellen Gruppen, insbesondere der Isocyanatgruppen verfolgt werden.

Die Reaktion wird vorzugsweise in einem inerten, mit Wasser mischbaren Lösungsmittel, wie Aceton, Tetrahydrofuran, Methylethylketon oder N-Methylpyrrolidon durchgeführt. Die Reaktionstemperatur liegt im allgemeinen zwischen 20 und 160°C, vorzugsweise zwischen 50 und 100°C.

Zur Beschleunigung der Reaktion der Diisocyanate können die üblichen Katalysatoren, wie Dibutylzinndilaurat, Zinn-II-octoat oder Diazabicyclo-(2,2,2)-octan, mitverwendet werden.

Das erfindungsgemäße Polyurethan hat einen k-Wert kleiner 40, vorzugsweise kleiner 35. Der k-Wert ist vorzugsweise größer 2, insbesondere größer 5. Der besonders bevorzugte Bereich ist 20 bis 30. Der k-Wert wird in 1 gew.-%iger Lösung in Dimethylformamid nach Fikentscher, Cellulosechemie 13, 58 (1932), bestimmt.

Das erfindungsgemäße Polyurethan hat eine breite Molekulargewichtsverteilung. Ein Maß für die Verteilung ist der Quotient aus dem gewichtsmittleren Molekulargewicht M_{w} und dem zahlenmittleren Molekulargewicht Mₙ. M_{w}/Mₙ ist vorzugsweise größer 1,5, besonders bevorzugt größer 2. Im allgemeinen sind jedoch Verteilungen unter 6 ausreichend breit.

Mₙ, M_{w} werden bestimmt durch Gelpermeationschromatographie (Polystyrolstandard, Elutionsmittel: Tetrahydrofuran, UV-Detektion).

Die Überführung von Carboxylgruppen in die entsprechenden Ionen erfolgt z.B. durch Neutralisation mit Basen oder Säuren vor oder während dem Dispergieren des Polyurethans in Wasser.

Nach der Dispergierung kann das organische Lösungsmittel, soweit gewünscht, abdestilliert werden. Bevorzugt sind weitgehend lösemittelfreie wäßrige Dispersionen.

Der Gehalt des Polyurethans in den Dispersionen kann insbesondere zwischen 5 und 70 Gew.-%, bevorzugt zwischen 20 bis 50 Gew.-%, bezogen auf die Dispersion, liegen.

Die erfindungsgemäßen Dispersionen können weitere Zusätze, z.B. Pigmente, Farbstoffe, Füllstoffe und in der Lacktechnologie übliche Hilfsmittel enthalten.

Zur Strahlungshärtung durch UV-Licht werden den Dispersionen Photoinitiatoren zugesetzt.

Als Photoinitiatoren in Betracht kommen z.B. Benzophenon, Alkylbenzophenone, halogenmethylierte Benzophenone, Michlers Keton, Anthron und halogenierte Benzophenone. Ferner eignen sich Benzoin und seine Derivate. Ebenfalls wirksame Photoinitiatoren sind Anthrachinon und zahlreiche seiner Derivate, beispielsweise β-Methylanthrachinon, tert.-Butylanthrachinon und Anthrachinoncarbosäureester und Acylphoshinoxide, z.B. 2,4,6-Trimethylbenzoyldiphenylphosphinoxid (Lucirin® TPO).

Die Photoinitiatoren, die je nach Verwendungszweck der erfindungsgemäßen Massen im allgemeinen in Mengen zwischen 0,05 bis 20 Gew.-%, vorzugsweise 0,05 bis 5 Gew.-%, bezogen auf das Polyurethan, eingesetzt werden, können als einzelne Substanz oder, wegen häufiger vorteilhafter synergistischer Effekte, auch in Kombination miteinander verwendet werden.

Vorteilhafte Zusätze, die zu einer weiteren Steigerung der Reaktivität führen können, sind tert. Amine wie z.B. Triethylamin und Triethanolamin. Auch sie werden im allgemeinen in Mengen bis zu 5 Gew.-%, bezogen auf das Polyurethan, eingesetzt.

Zu erwähnen ist noch, daß die erfindungsgemäßen Dispersionen auch thermisch vernetzt werden können, wenn sie Initiatoren, die bei erhöhten Temperaturen Radikale bilden, enthalten. Verwendbar sind z.B. Dibenzoylperoxid, Cumolhydroperoxid oder Azodiisobuttersäuredinitril. Weitere Beispiele für geeignete Initiatoren sind in "Polymer Handbook", 2. Auflage, Wiley & Sons, New York, beschrieben.

Die erfindungsgemäßen Dispersionen können für die Herstellung von Formkörpern und vorzugsweise Beschichtungen verwendet werden.

Sie können z.B. durch Spritzen, Gießen, Drucken oder Rakeln auf Substrate wie Metall, Kunststoff, Glas, Holz, Papier, Pappe, Leder oder Textil aufgebracht werden.

Bei der Strahlungshärtung werden die Überzüge im allgemeinen bis zu 30 min bei Temperaturen bis 100°C vorgeheizt, wobei sie physikalisch, d.h. ohne chemische Vernetzung trocknen, und anschlieβend kurzzeitig einer UV- oder energiereichen Elektronenstrahlung ausgesetzt. Hierzu werden die üblicherweise für die Härtung von Überzügen eingesetzten UV- bzw. Elektronenstrahlungsquellen verwendet.

Bei porösen Substraten, wie beispielsweise Leder, Papier, Holz, sind im allgemeinen nur sehr kurze Zeiten für die physikalische Trocknung erforderlich, da die Hauptmenge des Wassers vom Untergrund aufgenommen wird.

Die erfindungsgemäßen Polyurethane ergeben schon nach dem physikalischen Trocknen eine weitgehend klebefreie, trockene Beschichtung.

Nach der Strahlungshärtung hat die Beschichtung eine sehr gute Naßfestigkeit, gute Chemikalienbeständigkeit und gute mechanische Eigenschaften, z.B. eine gute Härte, Reißkraft, Elastizität, Flexibilität und gute Haftung. Überraschenderweise wird bei hoher Härte auch eine gute Flexibilität und Haftung erreicht.

Die Beschichtungen zeigen nach der Strahlungshärtung nur einen geringen Schrumpf. Auf grundiertem Leder wurde eine erhöhte Naßreibechtheit (bei mehr als 500 Reibcyclen mit feuchtem Filz) und Knickbeständigkeit (keine Beschädigung bzw. kein Ablösen der Beschichtung bei häufigem Knicken des Leders) festgestellt.

### Beispiele

### Herstellung der Polyurethandispersion

### Polyurethandispersion 1

In einem Rührkessel wurden 6,74 g eines Polyesters aus iso-Phthalsäure, 1,6-Hexandiol und Adipinsäure mit einem Molekulargewicht von ca. 2.000 (Zahlenmittel) und ca. 10.000 (Gewichtsmittel) (GPC), 3,26 kg 1,4-Butandiol, 7,83 kg 2-Hydroxyethylacrylat, 16,6 kg Aceton, 31,2 g Hydrochinonmonomethylether, 19,4 g Dibutylzinndilaurat und 58,2 g 2,6-di-t-butyl-p-cresol vorgelegt. Der Inhalt wurde auf 60°C vorgeheizt und während i 2 Stunden eine Mischung von 15,91 kg Isophorondiisocyanat mit 4,98 kg Basonat PLR 8638 (trimerisiertes HDI) zugetropft. Nachdem der Isocyanatgehalt der Mischung nach weiteren 1,5 Std nach Zulaufende auf 1,15 % abgesunken war, wurde 3,16 kg PUD-Salz als 40 %ige wäßrige Lösung innerhalb 10 min zugegeben. Nach weiteren 20 min wurde 47,7 kg destilliertes Wasser während 10 min zugegeben, der Innenraum auf 65°C erhitzt und Aceton-Wassermischung abdestilliert, wobei zum Schluß noch ein Vakuum von ca. 100 mbar angelegt wurde, um Schäumen zu vermeiden. Anschließend wurde der Verlust des abdestillierten Wassers durch erneute Zugabe ausgeglichen. Der Inhalt war durch die eingebaute Harnstoffbindungen und deren Wasserstoffbrückenbindungen noch hochviskos (1,5 bis 2,5 Pa·s), verlor jedoch durch 1,5-stündiges Rühren bei 75°C diese Viskosität bis zu einem Endwert von ca. 50 mPa·s. Die erhaltene Dispersion war schön hell, opak und blaustichig, und hatte Teilchengrößen von 70 bis 150 nm. Das Molekulargewicht der Polyurethane betrug ca. 2.000 (Zahlenmittel) und ca. 5.000 (Gewichtsmittel) (Polydispersität ca. 2,5).

### Polyurethandispersionen 2 bis 4

Die Herstellung entsprach derjenigen von Polyurethandispersion 1. Der Gehalt an Hydroxyethylacrylat wurde, wie in Tabelle 1 angegeben, reduziert und durch eine bezüglich der OH-Gruppen äquimolare Menge Butandiol ersetzt. Die Dispersionen wurden mit Wasser, soweit notwendig, auf einen Polyurethangehalt von 40 Gew.-% eingestellt. 25 g der Dispersionen wurden mit 0,4 g eines Photoinitiators (Irgacure® 500) versetzt. Die Dispersionen wurden mit einem 200 µm Kastenrackel auf Polyesterfolie aufgetragen und bei 60°C 20 min im Umluftschrank getrocknet. Anschließend wurden die Beschichtungen auf einem Transportband (10 m/min) mit 2 UV-Lampen bestrahlt (80 W/cm). Die Trockenfilmdicke betrug ca. 50 µm. Die selbsttragenden Klarlackfilme wurden von der Folie gelöst und in Streifen von 12,5 cm Breite und 15 cm Länge geschnitten. Jeweils 10 Prüfstreifen wurden in einer Universalprüfmaschine 81802 der Firma Frank geprüft und der Zugversuch (Reißdehnung, Reißkraft) nach DIN 53 455 und die Bestimmung des Elastitzitätsmoduls nach DIN 53 457 durchgeführt.

Die Pendelhärte wurde gemäß DIN 53 157 bestimmt. Sie ist ein Maß für die Härte der Beschichtung (hohe Werte: große Härte).

Die Erichsentiefung wurde nach DIN ISO 1520 bestimmt. Sie ist ein Maß für die Flexibilität und Haftung der Beschichtung (hohe Werte: gute Flexibilität).

Die Ergebnisse sind in Tabelle 1 angegeben.

**Tabelle 1**

| Dispersion | 1 | 2 | 3 | 4 |
|---|---|---|---|---|
| Hydroxyethylacrylat | 7,83 kg | 6,85 kg | 5,87 kg | 4,89 kg |
| Doppelbindungsgehalt mol/100 g Polyurethan | 0,169 | 0,150 | 0,130 | 0,110 |
| Aussehen der Dispersion | milchig opak | milchig opak | milchig weiß | weiß, thixotrop |
| Festgehalt (Gew.-%) | 40 | 40 | 35 | 32 |
| Teilchengröße (nm) | 65,4 | 113,4 | 158,7 | 277,1 |
| pH-Wert | 8,19 | 7,61 | 7,97 | 8,03 |
| K-Wert (1 % DMF) | 22,2 | 25,2 | 30,4 | 29,5 |
| Eigenschaften der Beschichtung | | | | |
| Reißkraft (N/mm²) | 59,9 | 60,5 | 55,7 | 54,1 |
| Reißdehnung (%) | 3,47 | 3,35 | 3,53 | 3,55 |
| Elastizitätsmodul (N/mm²) | 2.121 | 2.082 | 1.950 | 1.715 |
| Pendelhärte (sec) | 145 | 146 | 125 | 117 |
| Erichsenwert | 7,6/7,9 | 7,0/7,0 | 0,6/0,6 | 0,6/2,1 |
| Bleistifthärte | 2H | 2H | H | H |

## Patentansprüche

1. Wasserdispergierbares, strahlungshärtbares Polyurethan, bestehend aus
a) organischen Polyisocyanaten,
b) Polyesterpolyolen
c) gegebenenfalls von b) verschiedenen Polyolen
d) Verbindungen mit mindestens einer gegenüber Isocyanat reaktiven Gruppe und mindestens einer Carboxylgruppe oder Carboxylatgruppe
e) Verbindungen mit mindestens einer gegenüber Isocyanat reaktiven Gruppe und mindestens einer copolymerisierbaren ungesättigten Gruppe,
f) gegebenenfalls von a) bis e) verschiedenen Verbindungen mit mindestens einer gegenüber Isocyanat reaktiven Gruppe,
wobei der k-Wert des Polyurethans (gemessen in 1 gew.-%iger Lösung in Dimethylformamid) kleiner 40 ist und Aufbaukomponente e) in solchen Mengen eingesetzt wird, daß der Gehalt an copolymerisierbaren Doppelbindungen 0,15 bis 0,25 mol/100 g Polyurethan (fest) beträgt und bei der Herstellung des Polyurethan zumindest die Aufbaukomponenten a), b) und e) in einer Stufe umgesetzt werden.

2. Polyurethan gemäß Anspruch 1, wobei es sich bei d) um Aminocarbonsäuren bzw. deren Salze handelt.

3. Polyurethan gemäß Anspruch 2, wobei es sich bei den Aminocarbonsäuren um Addukte von Acrylsäure an C₂-C₆-Alkylendiamine im Molverhältnis von ca. 1:1 der Verbindungen handelt.

4. Polyurethan gemäß einem der Ansprüche 1 bis 3, wobei der Gehalt an Carbonsäuregruppen bzw. deren Salze 0,005 bis 0,1 mol/100 g Polyurethan (fest) beträgt.

5. Wäßrige Dispersionen eines Polyurethan gemäß einem der 1 Ansprüche 1 bis 4.

6. Verwendung eines Polyurethans gemäß einem der Ansprüche 1 bis 4, bzw. dessen wäßriger Dispersion gemäß Anspruch 5, als Beschichtungsmittel.

## Claims

1. A water-dispersable, radiation-curable polyurethane, essentially comprising
a) organic polyisocyanates,
b) polyesterpolyols,
c) if required, polyols differing from b),
d) compounds having at least one group reactive toward isocyanate and at least one carboxyl or carboxylate group,
e) compounds having at least one group reactive toward isocyanate and at least one copolymerizable unsaturated group and
f) if required, compounds differing from a) to e) and having at least one group reactive toward isocyanate,
the K value of the polyurethane (measured in 1% strength by weight solution in dimethylformamide) being less than 40 and component e) being used in amounts such that the content of copolymerizable double bonds is from 0.15 to 0.25 mol/100 g of polyurethane (solid) and at least the components a), b) and e) being reacted in one stage in the preparation of the polyurethane.

2. A polyurethane as claimed in claim 1, wherein d) is an aminocarboxylic acid or a salt thereof.

3. A polyurethane as claimed in claim 1, wherein the aminocarboxylic acid is an adduct of acrylic acid with a C₂-C₆-alkylenediamine in a molar ratio of about 1:1.

4. A polyurethane as claimed in any of claims 1 to 3, wherein the content of carboxyl groups or salts thereof is from 0.005 to 0.1 mol/100 g of polyurethane (solid).

5. Aqueous emulsion of a polyurethane as claimed in any of claims 1 to 4.

6. Use of a polyurethane as claimed in any of claims 1 to 4 or of an aqueous emulsion thereof as claimed in claim 5 as the coating material.

## Revendications

1. Polyuréthane durcissable par rayonnement et dispersable dans l'eau, constitué à partir de
a) polyisocyanates organiques,
b) polyester-polyols,
c) éventuellement de polyols différents de ceux de b),
d) composés ayant au moins un groupe réactif vis-à-vis des isocyanates, et au moins un groupe carboxyle ou carboxylate,
e) composés ayant au moins un groupe réactif vis-à-vis des isocyanates, et au moins un groupe insaturé copolymérisable,
f) éventuellement d'autres composés différents de ceux de a) à e) ayant au moins un groupe réactif vis-à-vis des isocyanates,
où la valeur de K du polyuréthane (mesurée dans une solution à 1% en poids dans le diméthylformamide) inférieure à 40, et on utilise le composant de construction e) dans des quantités telles que la teneur en doubles liaisons copolymérisables s'élève à 0,15-0,25 mole/100 g de polyuréthane (solide) et on fait réagir, lors de la préparation du polyuréthane, les composants de construction a), b) et e) en une étape.

2. Polyuréthane selon la revendication 1, où il s'agit pour d) d'acides aminocarboxyliques ou de leurs sels.

3. Polyuréthane selon la revendication 2, où les acides aminocarboxyliques sont des adduits de l'acide acrylique sur des alkylènediamine en C₂-C₆, dans un rapport en moles des composés d'environ 1 :1.

4. Polyuréthane selon l'une quelconque des revendications 1 à 3, où la teneur en groupes (acide carboxylique) ou en leurs sels s'élève à 0,005-0,1 mole/100 g de polyuréthane(solide).

5. Dispersions aqueuses d'un polyuréthane selon l'une quelconque des revendications 1 à 4.

6. Utilisation d'un polyuréthane selon l'une quelconque des revendications 1 à 4, ou d'une dispersion aqueuse selon la revendication 5, en tant qu'agent d'enduction.
